(19) **Europäisches Patentamt**
**European Patent Office**
**Office européen des brevets**

(11) **EP 4 549 383 A1**

(12) # EUROPEAN PATENT APPLICATION

(43) Date of publication:
**07.05.2025 Bulletin 2025/19**

(21) Application number: **23207555.6**

(22) Date of filing: **02.11.2023**

(51) International Patent Classification (IPC):
*C01B 32/05* (2017.01)    *H01M 4/86* (2006.01)
*H01M 4/02* (2006.01)    *H01M 4/92* (2006.01)

(52) Cooperative Patent Classification (CPC):
**H01M 4/8605; C01B 32/30; H01M 4/926;**
C01P 2004/60; C01P 2006/16; H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Albert-Ludwigs-Universität Freiburg**
**79098 Freiburg (DE)**

(72) Inventors:
• **Fischer, Anna**
**79117 Freiburg (DE)**
• **Küspert, Sven**
**79104 Freiburg (DE)**
• **Ortlieb, Sven**
**79108 Freiburg (DE)**
• **Berestok, Taisiia**
**8057 Zürich (CH)**
• **Elsässer, Patrick**
**79822 Titisee-Neustadt (DE)**
• **Illich, Luis**
**79104 Freiburg (DE)**
• **Martin, Julian**
**79104 Freiburg (DE)**
• **Oechsler, Jan**
**79104 Freiburg (DE)**
• **Petitdemange, Eliot**
**68630 Bennwihr (FR)**
• **Völker, Christian**
**79114 Freiburg (DE)**

(74) Representative: **noventive**
**Patentanwaltsgesellschaft mbH**
**Riesstraße 16**
**80992 München (DE)**

(54) **LOW DISPERSITY POROUS SPHERICAL CARBON PARTICLES WITH ACTIVE MATERIAL SUPPORTED THEREON, POROUS LAYERS MADE THEREFROM, THEIR PREPARATION AND THEIR USE**

(57)    The present invention relates to compositions comprising one or more sets of active material loaded porous spherical carbon particles (APCPs), wherein each of said sets of active material loaded porous spherical carbon particles has a monomodal, bimodal or multimodal particle diameter distribution, and/or a monomodal, bimodal or multimodal templated pore size distribution, wherein each mode of said particle diameter distribution defines a subset of APCPs within the set, each subset having a particle diameter dispersity (d) of 1.2 or less, and each mode of the templated pore size distribution defines a subset of APCPs within the set, each subset having a templated pore size dispersity (d') of 1.2 or less. The invention further relates to the method of production of such compositions, electrodes obtained from such compositions and their use in various applications.

**Fig. 2**

**Description**

FIELD OF THE INVENTION

The present invention relates to active material-loaded porous spherical carbon particles, porous layers made therefrom and their methods of production. The present invention further relates to electrodes comprising such active material-loaded porous spherical carbon particles and porous layers, with defined three-dimensional structures, and to further uses of the active material-loaded porous spherical carbon particles and porous layers of the invention.

BACKGROUND OF THE INVENTION

In the field of catalysis, be it in the gas phase, liquid phase or ielectrocatalysis, best possible catalyst activity, selectivity, utilisation and longevity requires supported catalysts with a controlled morphology, optimised to the required application. A supported catalyst thereby consists of an active material finely dispersed on a porous support material. To maximise catalyst utilisation, and reduce the required amount of active material, thereby reducing costs, the active materials are loaded onto or into porous supports as continuous films, discrete (nano) particles, clusters and/or even single sites, i.e. in the micrometer, nanometer and even atomic scale. To be able to flexibly adjust the performance-determining parameters of the catalyst, the morphology and porosity of the supports should be adaptable, such that a high catalyst dispersion becomes possible. Product selectivity of a catalytic reaction depends both on the catalyst nature and the support material. For example, diffusion can be influenced by intraparticular porosity (the porosity within catalyst particles) and interparticular porosity (the porosity between catalyst particle), thereby influencing the resting times of reagents at or in the catalyst particle, bed, moulded body or layer and ultimately product selectivity. Turnover rates are similarly affected. Attaining as close as possible to the intrinsic turnover rates of a catalytically active material requires optimisation of the support material to achieve effective mass transport. Furthermore, catalytic activity of the supported material may be enhanced by catalyst-support interactions to further improve turnover rates. Finally, the support effects the longevity of a catalyst. On the one hand, catalyst-carrier interaction may lead to anchoring of the active material on the carrier, on the other hand, homogeneous dispersion of the active material on the carrier offers higher stability compared to unstructured catalyst material.

In the field of electrocatalysis, the same considerations apply and need to be extended to 3D-porous electrodes comprising 3D-porous catalyst layers, built from 3D-percolated catalyst particles. The 3D-porous structure resulting from the packing of the catalyst particles is characterized by its interparticulate porosity and also influences the overall performance, as this porosity is essential for mass-transport throughout the entire electrode or catalyst layer thickness.

In the field of electrochemical energy storage, e.g. in the field of battery and (pseudo)capacitor technology, the same considerations apply. Here the active material is not defined as active in terms of catalytically active but rather active in the sense of charge storage capability.

Carbon-based support materials for catalytically active materials are essential elements for the design of catalyst, e.g. in hydrogenation and electrocatalytic reactions. They are particularly popular in electrocatalytic applications, due to their electrical conductivity. The same applies for battery or pseudocapacitor technology applications in the field of energy storage. Furthermore, ample morphological adaptability is possible, since parameters such as specific surface area, pore structure, electrical conductivity, or elemental composition may be adapted during the synthesis of carbon supports in case polymerisation and templating approaches are employed, followed by pyrolysis and template removal.

One application of these carbon-based support materials lies in the field of electrochemical energy conversion, especially in the field of electrocatalysis in fuel cells and electrolysers. In these applications, optimisation by controlled 3D structuring of the catalyst particles and catalyst layers is a key requirement for the best possible catalyst utilisation, conversion rate, longevity, and in some cases also product selectivity (e.g. in the field of electrochemical $CO_2$-reduction also called $CO_2$-electrolysis).

Membrane electrode assemblies (MEAs) play a central role in the field of electrochemical energy conversion, including for example fuel cells and electrolysers. They form the electrochemical core of these technologies and determine the achieved performance indicators, such as for example power density or hydrogen production rate. MEAs consist of different closely joined components: an anode gas diffusion layer (GDL) or a porous transport layer (PTL), an anode catalyst layer (ACL), an ion exchange membrane (proton exchange membrane (PEM) or anion exchange membrane (AEM) in the case of fuel cells and electrolysis), a cathode catalyst layer (CCL) and a cathode GDL. The GDLs may further include a microporous layer (MPL).

MEAs can be processed and assembled in two ways. On the one hand, a membrane can be coated on one side with the anode catalyst, resulting in an ACL. The other side is coated with the cathode catalyst, resulting in a CCL. The closely joined layer structure between ACL, PEM/AEM and CCL is called a catalyst coated membrane (CCM). The CCM is then provided with the microporous and gas diffusion layers on both sides and pressed. A different approach is based on coating the anode-side and cathode-side microporous and gas diffusion layers with anode and cathode catalyst layers (ACL and CCL), resulting in anode and cathode gas diffusion electrodes. To assemble an MEA, these are then pressed together with a PEM or an AEM, depending on the envisaged technology. The three-dimensional structure (percolation, tortuosity, porosity, ionomer to carbon content) of the catalyst layers is an important factor in the final performance of a membrane-based electrochemical energy conversion system, i.e. a hydrogen PEM or AEM fuel cell or a PEM or AEM water electrolyser.

The catalyst layers (ACL and CCL) comprise constituent particles (ordinarily carbon particles) that are bound together by ion-conducting polymers (so-called ionomers), which act as electrolytes and binders in the catalyst layers and between the catalyst layers and the membrane. The constituent particles are loaded with a catalytic species which impart catalytic activity to the catalyst layers, thereby forming a catalyst particle. The catalyst layers may be produced from inks or pastes containing a solvent, an ionomer and the corresponding constituent particles using various coating techniques. This results in catalyst layers or electrodes in which the porosity is influenced by factors such as the arrangement of the constituent particles in relation to each other (percolation), as well as by the aggregation behaviour of these particles. Dry coating techniques are also know to the skilled person.

Suter et. al., in the review article "Engineering Catalyst Layers for Next-Generation Polymer Electrolyte Fuel Cells: A Review of Design, Materials, and Methods" (Adv. Energy Matter. 2021, 11, 2101025; https://doi.org/ 10.1002/aenm.202101025), have shown that the extent of interparticle porosity in the catalyst layer, i.e. the porosity between the constituent particles, is determined by the morphology of the constituent particles themselves (primary particles) and their secondary aggregates, significantly influenced by the morphology of the carbon support, by the ionomer, the composition of the catalyst ink or paste and the coating process. Similar relationships have also been described by Liu et al. in the review article "Effect of Catalyst Ink and Formation Process on the Multiscale Structure of Catalyst Layers in PEM Fuel Cells" (Appl. Sci. 2022, 12, 3776; https://www.mdpi.com/ 2076-3417/12/8/3776).

An optimised porous structure of the catalyst layer reconciles the requirements for high interparticle conductivity through contacted packing of the constituent particles and rapid ion transport through continuous percolation of the ionomer around the constituent particles and to the membrane, as well as rapid gas and water transport through highly porous morphologies of the catalyst particle/ionomer agglomerates. The most important structure-determining building block of the three-dimensional porous catalyst layer is the (carbon) support, which determines the morphology of the catalyst particles, and comprises catalytically active species (e.g. metallic nanoparticles in the case of fuel cells and electrolysis technology).

Similar considerations apply for battery and pseudocapacitor electrodes. Here, the 3D-porous structure of the electrode determines mass transport (ionic and electronic) and thereby has a huge impact on mass transport and hence rate capability.

One specific example of a state-of-the-art catalyst for PEM fuel cell anodes and cathodes as well as PEM electrolyser cathodes is represented by metallic nanoparticles (e.g. Pt-based nanoparticles) that are finely distributed on the surface or in the pores of conductive carbon supports (carbon black). The deposition processes of the catalytically active material (e.g. Pt-based nanoparticles in the case of fuel cell and electrolysis applications) can be divided into indirect and direct processes. While in the indirect process the catalytically active material is synthesised separately and then applied to the carbon support, in the direct process precursors of the active material are applied to the support itself or to a corresponding structure derived therefrom, and then physically or chemically converted into the catalytically active form. The physical or chemical production methods can be classified into dry (e.g. ball milling), wet (e.g. chemical reduction of active material salts by a reducing agent such as $H_2$, small organic molecule, etc.) or gaseous (e.g. chemical vapour deposition, atomic layer deposition, etc.) conditions. State of the art carbon supports employed are Black Pearls(R), Vulcan(R), Ketjenblack(R) (see e.g. Wang et al. in "Achievements, challenges and perspectives on cathode catalysts in proton exchange membrane fuel cells for transportation" (Nature Catalysis 2019, 2, 578 - 589; https:// doi.org/10.1038/s41929-019-0304-9)).

All these state-of-the-art carbon supports have high dispersity primary particle sizes (< 100 nm), which aggregate into larger undefined porous secondary particles. The porosity and 3D porous structure of catalyst layers in CCMs or gas diffusion electrodes (GDE) depend significantly on the following parameters: the constituent particle size, the constituent particle size distribution, the constituent particle morphology as well as the constituent particle agglomeration and stability of possible agglomerates in dispersion media, i.e. the single particle dispersibility. These factors determine the constituent particle percolation and packing resulting in the catalyst layer, which in this case defines the interparticle porosity in the layer. The intraparticle porosity, if present, defines an additional porosity and hierarchy level in the catalyst layers and determines where the catalytically active species are located; outside the constituent particles in the case of non-porous primary particles, inside the constituent particles in the case of highly porous primary particles.

Same considerations apply for battery or supercapacitor type 3D-porous electrodes, composed a. o. of active material (active in the sense of charge storage capability) loaded porous carbon particles.

Both interparticle and intraparticle porosity levels are essential to optimise the mass transport of reactants and products in the catalyst layers and thus maximise product selectivity, catalyst utilisation, conversion rate and longevity of the systems. In the case of fuel cell or electrolyser catalyst layers, the mass transport of oxygen, hydrogen, protons/hydroxide anions and water must be optimised, while in the case of classical heterogeneous catalysis, multidimensional reactant and product matrices must often be taken into account in the optimisation of mass transport through the structuring of the catalyst layer. Similar considerations apply for electrodes designed for battery and supercapacitor technologies, where both electronic mass transport and ionic mass transport needs to be optimized to achieve high-rate capability.

State-of-the-art catalysts for fuel cell anodes and cathodes as well as electrolyser cathodes are based on disperse carbon supports with broad particle size (< 100 nm) and agglomerate distributions, as mentioned before, and thus have a very broad carbon particle size distribution (< 100 nm) themselves. This leads to catalyst layers based on these having an uncontrolled and rather compact porosity (as a result of the small particle size), which cannot be adjusted to maximum performance, as the carbon support particles have highly disperse particle sizes due to their manufacturing processes. Thus, no controlled or tailored bottom-up 3D catalyst layer/electrode design is possible based on the currently available state-of-the-art catalysts, since the state-of-the-art catalysts consist of state-of-the-art high dispersity non-adjustable carbon materials; independent of the catalytically active species supported on these carbons.

Similar considerations apply for electrodes for battery or pseudocapacitor technologies, as state-of-the-art battery or pseudocapacitor materials are based on active materials (in terms of charge storage) with ill-defined particle properties (e.g. shape, size, porosity etc.)

When catalysts composed of these prior art carbons are manufactured or integrated into CCMs, GDEs, MEAs in the field of electrocatalysis or catalyst molded bodies, beds, or coatings in the field of heterogeneous catalysis, undefined catalyst layers or superstructures are created in which the porosity is determined by the packing of the constituent particles or the secondary catalyst aggregates. Due to the high dispersity of the constituent particles, the 3D porous structure of the catalyst layers is not adjustable and in many cases (if the electrode thickness is too high) only partially accessible for gases, protons/hydroxide etc. Furthermore, the mass transport in the catalyst layers can hardly be optimised, since the porosity in the catalyst layer is programmed by the constituent particle morphology and size after processing, which severely limits the performance of such non-optimised CCMs/GDEs/MEAs, especially at high current densities. Finally, if the constituent particles are very small, their tight packing upon formation of a catalyst layer leads to low interparticular porosity, thereby further limiting accessibility for educts (gases, protons etc.) and removal of products. This limits the achievable power for fuel cells and the achievable hydrogen productivity for electrolysers.

Similar considerations apply for heterogeneous catalysis (gas phase and liquid phase), where typically catalyst molded bodies, catalyst beds and/or catalyst coatings are employed.

Similar considerations also apply for battery and (pseudo)supercapacitor technologies in which the interparticle porosity governs ionic mass transport via the electrolyte pathways throughout the electrode and hence active material accessibility, capacity and capacity retention at higher charging and discharging current densities.

Joo et al., in "Preparation of mesoporous carbon templated by silica particles for use as a catalyst support in polymer electrolyte membrane fuel cells" (Catalysis Today 111 (2006), 171 - 175) disclose Pt-loaded mesoporous carbon catalysts. However, the catalysts have irregular morphology, as shown by TEM imaging.

Shu et al., in "Hierarchically mesoporous carbon spheres coated with a single atomic Fe-N-C layer for balancing activity and mass transfer in fuel cells" (Carbon Energy. 4 (2022) 1 - 11) disclose the formation of iron-loaded mesoporous carbon spheres, consisting of hierarchically porous carbon spheres (HPCS) as the core and a single Fe atom-doped m-phenylenediamine coating layer (Fe-mPDA) as a functional shell. However, the particle size dispersity of these structures was large and therefore it was not possible to produce regularly structured catalyst layers.

EP 3 828 133 A1 discloses the use of mesoporous carbon as a catalyst support for an air electrode catalyst carrier in a polymer electrolyte fuel cell. In this case also, the structure of the mesoporous carbon was irregular and as were the obtained electrode structures, as shown be SEM imaging.

Choi et al., in "Single-Step Fabrication of a Multiscale Porous Catalyst Layer by the Emulsion Template Method for Low Pt-Loaded Proton Exchange Membrane Fuel Cells" (ACS Appl. Energy Mater. 2021, 4, 4, 4012 - 4020) disclose the use of emulsion template methods for single-step fabrication of multiscale porous catalyst layers with macropores and mesopores.

Wang et al., in "Controlled Synthesis of N-Doped Carbon Nanospheres with Tailored Mesopores through Self-Assembly of Colloidal Silica" (Angew. Chem. Int. Ed. 2015, 54, 15191 - 15196) discloses composite particles obtained by oxidative polymerisation of aniline in the presence of silica templates. However, the particle sizes and pore sizes obtained could not be controlled independently.

CN 116495731 A also discloses porous carbon microspheres and methods for their production. The microspheres are said to have controllable pore channel structure and particle size distribution. However, the obtained particle size dispersities are not satisfactory.

The limitations regarding mass transport in fuel cell and electrolyser cathodes and anodes similarly apply to other applications, such as for example batteries or heterogeneous catalysis. The state of the art therefore constitutes a problem.

SHORT DESCRIPTION OF THE INVENTION

The present invention is defined in the appended claims.

The invention solves the above problem by providing active material loaded low dispersity porous spherical carbon particles which have independently adjustable particle sizes and templated pore sizes. This allows to build up 3D-percolated catalyst layers or electrode structures, based on carbon structures assembled from the porous spherical carbon particles, in which the intraparticle porosity is defined by the intraparticle porosity of the low dispersity spherical carbon particles loaded with active material. The intraparticle porosity of the porous active carbon structure according to the invention is selectively adjustable to the same extent as the intraparticle porosity of the low dispersity spherical carbon particles.

The low dispersity and spherical shape of the carbon particles, in combination with their controlled intraparticle porosity, results in highly defined hierarchical 3D porous carbon structures with highly adjustable and controllable porosity. It follows that the properties of the carbon structures in mass transport can be specifically controlled via the properties of the carbon support particles loaded with active material, in order to generate increased performance values in PEM or AEM fuel cells, PEM or AEM electrolysers and general heterogeneous (electro)catalysis. Similar considerations apply to battery and (pseudo)supercapacitor technologies.

Thus, by controlling the shape and size of the porous spherical carbon particles, the 3D interparticular porosity in size and shape between the active material loaded carbon particles in the catalyst layer can be tailored or adjusted. While the presence of the active material loading on the surface or within the templated pores of the spherical carbon particles may influence the actual porosity of the overall structure, the change in porosity does not significantly affect its properties. It follows that the properties of the catalyst layers in mass transport can be specifically controlled via the properties of the carbon supports and the active material loaded electrodes derived from them.

This bottom-up particle based approach thus enables for the first time and systematically an optimisation of the tailoring of the porosity and an improvement of the mass transport in CCMs, GDEs or MEAs as well as catalyst layers in heterogeneous (electro)catalysis. Optimised mass transport enables higher current densities to be achieved in fuel cells and electrolysis cells, i.e. higher power densities or productivities. In the field of heterogeneous (electro)catalysis, catalyst utilisation rates, conversion rates, stabilities and higher product selectivities, can be achieved, among other things. Similar advantages are derived from these 3D porous active material loaded electrode structures in battery and (pseudo)supercapacitor technology, where improved mass transport is achieved resulting in higher capacities and capacity retention at high current densities.

In particular, the present invention is embodied by a composition comprising one or more sets of active material loaded porous spherical carbon particles (APCPs), wherein each of said sets of APCPs has a monomodal, bimodal or multimodal particle diameter distribution, and/or a monomodal, bimodal or multimodal templated pore size distribution, wherein each mode of said particle diameter distribution defines a subset of APCPs within the set, each subset having a particle diameter dispersity (d) of 1.2 or less, and wherein each mode of the templated pore size distribution defines a subset of APCPs within the set, each subset having a templated pore size dispersity (d') of 1.2 or less. The APCPs that are included in the composition according to the invention are provided in one or more sets, each set being defined either by its particle diameter distribution, or by its templated pore size distribution, or by both its particle diameter distribution and its templated pore size distribution. According to the present invention, the particle diameter dispersity and/or the templated pore size dispersity are required to be low ($\leq$ 1.2).

According to this aspect of the invention, each set of APCPs may have a monomodal, bimodal or multimodal particle size distribution. Sets that do not have a monomodal particle size distribution may be subdivided into subsets corresponding to the number of peaks in the particle size distribution. A set with a bimodal particle size distribution consists of two subsets, each with a monomodal particle size distribution. In this case, each subset has a subset particle diameter dispersity (d) of 1.2 or less. Similarly, sets with a particle size distribution of three, four or more modes consist of three, four or more subsets, each with a monomodal particle size distribution. In these cases also, each subset has a subset particle diameter dispersity (d) of 1.2 or less.

Further, according to this aspect of the invention, each set of APCPs may have a monomodal, bimodal or multimodal templated pore size distribution. Sets that do not have a monomodal templated pore size distribution may be subdivided into subsets corresponding to the number of peaks in the templated pore size distribution. A set with a bimodal templated pore size distribution consists of two subsets, each with a monomodal templated pore size distribution. In this case, each subset has a subset templated pore size dispersity (d') of 1.2 or less. Similarly, sets with a templated pore size distribution of three, four or more modes consist of three, four or more subsets, each with a monomodal templated pore size distribution. In these cases also, each subset has a subset templated pore size dispersity (d') of 1.2 or less.

According to this aspect, each set of APCPs making up the composition according to the invention may be defined by either its particle diameter distribution, or its templated pore size distribution, or both.

According to a further aspect of the present invention, one or more of the sets making up the composition may have either a monomodal particle size distribution, or a monomodal templated pore size distribution. For example, the composition according to this aspect of the invention may include one or more sets of APCPs having a monomodal particle size distribution and a particle diameter dispersity (Đ) of 1.2 or less, optionally one or more sets of APCPs having bimodal or multimodal particle size distributions, of which the modal subsets have subset particle size dispersities (d) of 1.2 or less, and optionally one or more sets of APCPs having bimodal or multimodal templated pore sizes, of which the modal subsets have subset templated pore size dispersities (d') of 1.2 or less. Alternatively, for example, the composition according to this aspect of the invention may comprise one or more sets of APCPs having a monomodal templated pore size distribution and a templated pore size dispersity (Đ') of 1.2 or less, optionally one or more sets of APCPs having bimodal or multimodal templated pore size distributions, of which the modal subsets have subset templated pore size dispersities (d') of 1.2 or less, and optionally one or more sets of APCPs having bimodal or multimodal particle size distributions, of which the modal subsets have subset particle size dispersities (d) of 1.2 or less.

According to this aspect, at least one set of APCPs comprised in the composition will have either a monomodal particle diameter distribution or a monomodal templated pore size distribution.

According to a further aspect of the present invention, one or more of the sets of porous spherical carbon particles have a monomodal particle diameter distribution with a particle diameter dispersity (Đ) of 1.2 or less, and a monomodal templated pore size distribution with a templated pore size dispersity (Đ') of 1.2 or less. For example according to this aspect of the invention, the composition may comprise one set of APCPs having a monomodal particle diameter distribution and a particle diameter dispersity (Đ) of 1.2 or less, and a monomodal templated pore size distribution with a templated pore size dispersity (Đ') of 1.2 or less, optionally one or more further sets of APCPs having particle diameter dispersities (Đ) of 1.2 or less, and templated pore size dispersities (Đ') of 1.2 or less, and optionally one or more further sets of APCPs having bimodal or multimodal templated pore size distributions, of which the modal subsets have subset templated pore size dispersities (d') of 1.2 or less, and optionally one or more sets of APCPs having bimodal or multimodal particle size distributions, of which the modal subsets have subset particle size dispersities (d) of 1.2 or less.

According to this aspect, at least one set of APCPs comprised in the composition will have both a monomodal particle diameter distribution and a monomodal templated pore size distribution, each with a dispersity of 1.2 or less.

According to a further aspect of the present invention, the composition consists of just one set of porous spherical carbon particles. This one set of APCPs may have a monomodal, bimodal or multimodal particle size distribution, with each modal subset having a subset particle size dispersity (d) of 1.2 or less, and/or a monomodal, bimodal or multimodal templated pore size distribution, with each modal subset having a subset templated pore size dispersity (d') of 1.2 or less. In one specific embodiment, the composition may consist of a set of APCPs having a monomodal particle diameter distribution with a particle diameter dispersity (Đ) of 1.2 or less, and a monomodal templated pore size distribution with a templated pore size dispersity (Đ') of 1.2 or less.

According to this aspect, only one set of APCPs is comprised in the composition. The composition consists of APCPs having a monomodal, bimodal or multimodal particle diameter distribution and a monomodal, bimodal or multimodal templated pore size distribution, each with modal subset dispersities (d, d') of 1.2 or less. In one specific embodiment, the composition consists of APCPs having a monomodal particle diameter distribution and a monomodal templated pore size distribution, each with a dispersity (Đ, Đ') of 1.2 or less.

According to the present invention, a set of porous spherical carbon particles having a bimodal or a multimodal templated pore size distribution may comprise individual particles having a monomodal templated pore size distribution. That is to say, each particle within the set includes pores that all have similar templated pore size, with a templated pore size dispersity ≤ 1.2. Alternatively, a set of porous spherical carbon particles having a bimodal or a multimodal templated pore size distribution may comprise individual particles having a bimodal or multimodal templated pore size distribution. This means that each individual particle within the set may comprise pores of different templated pore sizes.

In a preferred embodiment, at least one of the particle diameter dispersity (Đ), templated pore size dispersity (Đ'), subset particle diameter dispersity (d), and subset templated pore size dispersity (d') is 1.1 or less. In a further preferred embodiment, all these parameters are 1.1 or less.

According to one aspect of the invention, the porous spherical carbon particles have particle diameters of 10 nm to 5000 nm, preferably of 25 nm to 2500 nm or of 50 nm to 500 nm, and the templated pore sizes are from 1 nm to 1000 nm, preferably from 2 nm to 500 nm or from 5 nm to 100 nm. The use of these particle diameters and templated pore sizes may result in the porous spherical carbon particles having a specific surface area of 25 $m^2 \cdot g^{-1}$ to 3000 $m^2 \cdot g^{-1}$, or from 200 $m^2 \cdot g^{-1}$ to 1500 $m^2 \cdot g^{-1}$, and pore volumes of 0.1 $cm^3 \cdot g^{-1}$ to 5.0 $cm^3 \cdot g^{-1}$, or from 0.25 $cm^3 \cdot g^{-1}$ to 3.0 $cm^3 \cdot g^{-1}$.

According to one aspect of the invention, the active material of the porous spherical carbon particles may be selected from metals, metal alloys, metal compounds such as oxides, sulfides, nitrides, phosphides, carbides or others in the form of continuous films, nanoparticles, clusters and/or single-site catalysts, and molecular compounds, coordination complexes, polymers, enzymes and any combinations thereof.

According to one aspect of the invention, the active material of the porous spherical carbon particles may be an active material which is active in heterogeneous catalysis (such as gas phase or liquid phase catalysis), electrocatalytic reactions, electrochemical reactions (such as energy storage or desalination technologies), adsorption and absorption applications, or separation technologies.

According to one aspect of the present invention, the active material of the porous spherical carbon particles may be in the shape of spheres, cages, cubes, triangles, rods, octahedrons or repeating 2D- or 3D-geometrical shapes, or any combination thereof.

According to one aspect of the present invention, the active material loading of the porous spherical carbon particles may be 1 to 95 wt.-%, based on the total weight of the active material-loaded porous spherical carbon particles. For example the loading may be 5 to 90 wt.-%, or 10 to 85 wt.-%, or 15 to 80 wt.-%, or 20 to 75 wt.-%, or 25 to 70 wt.-%, or 30 to 65 wt.-%, or 35 to 60 wt.-%, or 40 to 55 wt.-%, or 45 to 50 wt.-%. Depending on the intended use, the activity of the porous spherical carbon particles according to the invention may be adapted in line with the active material loading.

Also part of the present invention are porous active carbon structures assembled from a composition according to the invention.

According to one aspect of the present invention, the APCPs forming the porous active carbon structures are arranged in a layered fashion within the porous active carbon structure. Each layer may be assembled from one or more sets of porous carbon particles. Irrespective of whether the layers consist of one or more sets of porous carbon particles, the layers may be monolayers having a thickness of exactly one porous spherical carbon particle, or multilayers having a thickness of more than one porous spherical carbon particle. For example, a porous active carbon structure may comprise a first layer and a second layer disposed parallel to and in contact with the first layer, wherein each of the first and second layers consists of two sets of APCPs as described above. Alternatively, for example, a porous active carbon structure according to this aspect may consist of first, second and third layers, arranged in parallel to each other in this order and in contact with each other, and wherein the layers each have a monomodal particle diameter distribution and a monomodal pore size distribution, with the particle diameters and templated pore sizes being different for each set.

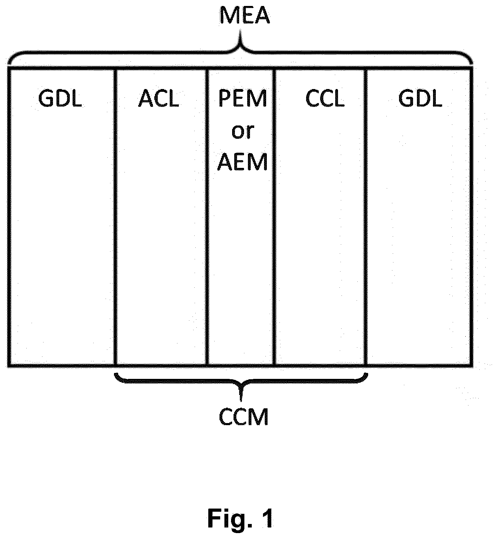

According to one aspect of the present invention, individual layers included within the porous active carbon structure may include the same or different active materials, and/or individual layers may include different amounts of active material. For example, one or more of the layers included within the porous active carbon structure may not include any active material, provided that at least one layer included within the porous active carbon structure does include active material. Indeed, a layer not including any active material would be considered a microporous layer (MPL) as part of a GDL (see Fig. 1).

According to one aspect of the present invention, the porous active carbon structure may have interparticle pore volume which is from 5% to 93%, for example from 10% to 85%, or from 15% to 75%, or from 20% to 55%, or from 25% to 50%, or preferably from 26% to 48%. Interparticle pore volume refers to the volume of the porous active carbon structure which is left void between individual porous spherical carbon particles after assembly. Depending on the intended use of the porous active carbon structure, the interparticle pore volume may be selected to achieve best possible results.

According to one aspect of the present invention, the ratio of intraparticle pore volume to interparticle pore volume is from 0.05 to 3.0, preferably from 0.1 to 2.0, more preferably from 0.7 to 1.9. Intraparticle pore volume derives from the volume of the templated pores of the porous spherical carbon particles employed to assemble the porous active carbon structure according to the invention, whereas interparticle volume refers to the volume of the porous active carbon structure which is left void between individual porous spherical carbon particles after assembly. The ratio of intraparticle pore volume to interparticle pore volume is derived from cumulative pore volume (obtained by QSDFT computation from $N_2$ physisorption) and density measurement of the porous active carbon structure (obtained by pycnometry), under assumption of a filling ratio of 74% for perfect packing of spherical carbon particles. Depending on the intended use of the porous active carbon structure, the ratio of intraparticle pore volume to interparticle pore volume may be selected to achieve best possible results.

According to one aspect of the present invention, the active material may be supported on individual porous spherical particles, and/or it may be arranged within the porous active carbon structure.

Also part of the present invention are methods for the production of the porous spherical carbon particles according to the invention, comprising the steps of (i) polymerisation of a polymerizable precursor in the presence of a template, in order to form a polymer-template composite, (ii) carbonisation of the obtained polymer-template composite, (iii) removal of the template by chemical etching, wherein the choice of template and the initiator concentration may be adjusted to independently define particle diameter distribution and pore size distribution, and (iv) deposition of one or more active materials, wherein the deposition may occur after step (i), (ii) and/or (iii).

According to one embodiment, during step (i), the particle diameter and the particle diameter dispersity (Đ) of the obtained polymer-template composite are controlled independently from the particle diameter of the template by adjusting the molar ratio of initiator to polymerizable precursor. For example, the molar ratio of initiator to polymerizable precursor is in the range of 0.01 to 10, preferably of 0.1 to 2.

According to one embodiment, the molar ratio of polymerizable precursor to template may be in the range of 0.01 to 4, for example from 0.1 to 1, or from 0.3 to 0.8, or from 0.5 to 0.6.

According to one embodiment, the template may consist of inorganic nanoparticles having particle diameters in the range of 1 nm to 800 nm, preferably from 5 nm to 100 nm, and the inorganic nanoparticles may have a particle diameter dispersity of 1.2 or less.

According to one embodiment, the inorganic nanoparticles may be selected from $SiO_2$, metallic oxides and inorganic salts.

Also part of the present invention are methods for the production of the porous active carbon structures according to the invention, comprising the steps of (i) providing one or more sets of porous spherical carbon particles as defined in above, (ii) mixing the provided porous spherical carbon particles with one or more additives, (iii) applying the obtained mixture onto a substrate to form a layer of porous active carbon structure, (iv) drying and/or curing the applied mixture to form a dry layer of porous active carbon structure; and (v) optionally repeating steps (i) and (ii), followed by (iii') applying the obtained mixture onto the previously formed layer of porous active carbon structure, and followed by (iv') optionally curing the applied mixture to form a layer of porous active carbon structure on top of the previously formed layer of porous active carbon structure, followed by optionally (v') repeating step (v). According to this embodiment, the method may optionally further comprise one or more calendaring steps after step (iv), (iv'), (v) and/or (v'). According to the invention, the porous spherical carbon particles are loaded with an active material.

According to one embodiment, the mixing step (ii) may include addition of a dispersion medium to form an ink or a paste, and step (iii) of applying the obtained ink or paste is carried out by 3D-printing, slot-die coating, inkjet printing, doctor-blading, spray coating, spin-coating or dip-coating. According to an alternative embodiment, the mixing step (ii) leads to the formation of a dry particulate composition.

According to this aspect, the substrate onto which the mixture is applied may be a current collector, such as for example a gas diffusion layer or membrane for a fuel cells or an electrolyzer, an aluminium or copper foil for a battery or a graphite foil for a supercapacitor, or a stainless steel microreactor wall.

Also part of the present invention are electrodes comprising APCPs and/or porous active carbon structures according to the invention. It has been found that the properties and applications of electrodes may be adapted and tuned by tailoring the ACPCs in line with the intended application. For example, in an electrode according to the present invention, mass transport may be influenced by interparticulate porosity, determined by the packing and diameter of the porous spherical carbon particles with a defined (low dispersity) templated intraparticulate porosity. The intraparticle porosity is thereby also important for the mass transport within the constituent particle. Also for example, capacitance and capacitance retention for pseudocapacitors and capacity or capacity retention for batteries may be regulated by the surface area of the porous spherical carbon particles, determined by their particle sizes and intraparticulate pore sizes, as well as interparticular porosity.

According to some aspects of the invention, the electrodes may be adapted by binders and/or conductive additives. For example, the electrodes according to the invention may include one or more polymeric binders and/or ionomers. Also for example, the electrodes according to the invention may include conductive additives, making up no more than 20 wt.-%, based on the total weight of the electrode, or no more than 10 wt.-%, based on the total weight of the electrode.

Also part of the present invention is the use of the APCPs, the porous active carbon structures and the electrodes of the present invention in electrochemical applications, such as electrochemical energy storage devices (batteries, double-layer capacitors) or electrochemical energy conversion devices (fuel cells, electrolysers).

Also part of the present invention is the use of the APCPs and the porous active carbons structures of the invention as or in conductive additives/scaffolds, gas diffusion layers, heterogeneous catalysis or in an article of manufacture for drug delivery, adsorption and absorption applications, or water purification applications.

SHORT DESCRIPTION OF THE FIGURES

The invention will be further illustrated by reference to the following figures:

Fig. 1 is a schematic representation of a PEM-based MEA layered structure;

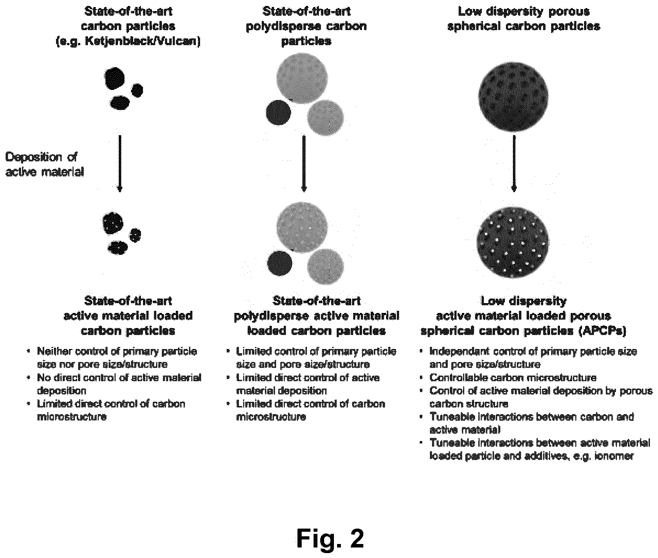

Fig. 2 is a schematic representation of polydisperse state-of-the-art carbon particles, which lead to undefined polydisperse active material loaded carbon particles (left and center), and of low dispersity carbon particles, which enable the production of defined and reproducible low dispersity active material loaded porous spherical carbon particles (right) with tuneable properties for their applications, according to the present invention;
Fig. 3 shows SEM images of carbon support materials in SE (secondary electron) mode of (a, b, c) KB, (e, f, g) MPNC-7-130 and (i, j, k) MPNC-7-240. SEM image measurements were carried out using a Field Emission Gun High Resolution SEM SU8220 (Hitachi);
Fig. 4 shows nitrogen physisorption measurements at 77 K of Ketjenblack, MPNC-7-130 and MPNC-7-240 on a 3P Instruments machine with (a) isotherms, (b) calculated pore size distribution, and (c) BET surface area;

Fig. 5 shows XRD (a) on a Bruker D8 Discover of Pt/KB, Pt/MPNC-7-130 and Pt/MPNC-7-240, SEM images of Pt/KB (in SE (secondary electron) mode b, d and TE (transmission electron) mode c, e), of Pt/MPNC-7-130 (in SE mode f, j and TE mode g, k) and of Pt/MPNC-7-240 (in SE mode h, I and TE mode i, m);

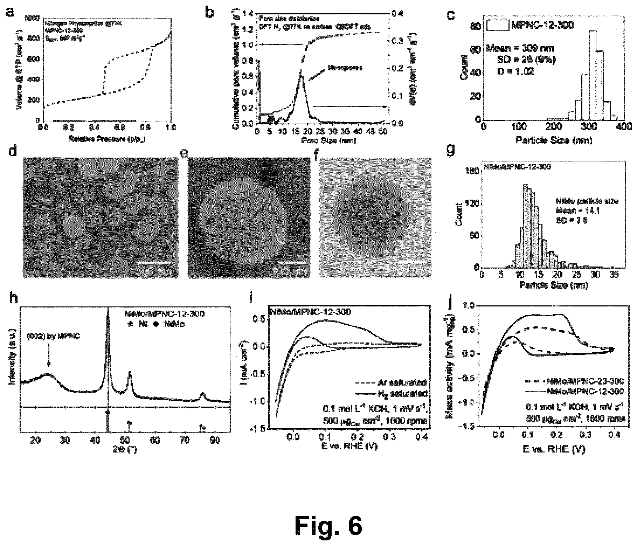

Fig. 6 shows nitrogen physisorption measurements at 77 K of mesoporous spherical carbon particles MPNC-12-300 (a) isotherms and BET surface area, (b) calculated pore size distribution, (c) particle size distribution, (d, e) SEM images of MPNC-12-300 at different magnifications, (f) SEM micrograph in TE modus of NiMo nanoparticle loaded MPNC-12-300, (g) NiMo nanoparticle size, (h) XRD pattern, (i) hydrogen oxidation activity in alkaline medium of NiMo nanoparticle loaded MPNC-12-300, and (j) dependence of electrochemical mass activity of HOR in alkaline medium on used NiMo/MPNC-12-300 and NiMo/MPNC-23-300;

Fig. 7 shows SEM images of MPNC-23-300 (a, b) MPNC-60-300 (e, f) and MPNC-100 (i, j). TEM images (c, g, k) and particle size distribution (d, h, I) of MPNC-23-300, MPNC-60-300 and MPNC-100-300, respectively, (m) total pore volume with QSDFT modelled relative share of micropores and mesopores and (n) BET and QSDFT surface areas with QSDFT modelled relative shares of micropores and mesopores of MPNC-23-300, MPNC-60-300 and MPNC-100-300, respectively;

Fig. 8 shows cross-sectional SEM images of $MoS_x$/MPNC-60-300 (a, b, c) and $MoS_x$/Vulcan (d, e, f) demonstrating a more porous electrode structure of $MoS_x$/MPNC-60-300;

Fig. 9 shows TEM images of $MoS_x$/MPNC-23 (a,d), $MoS_x$/MPNC-60 (b, e) and $MoS_x$/MPNC-100 (c, f);

Fig. 10 shows (a) particle size distribution based on QSDFT of nitrogen physisorption measurements at 77 K of mesoporous spherical carbon particles MPNC-7-130 and sulfur-loaded MPNC-7-130 (S/MPNC-7-130) revealing the successful impregnation of sulfur within the templated pores of MPNC-7-130, (b) Raman spectra of sulfur, MPNC-7-130 and S/MPNC-7-130, (c) cyclic voltammetry of S/MPNC-7-130 and (d) C-rate test of different S/MPNC materials;

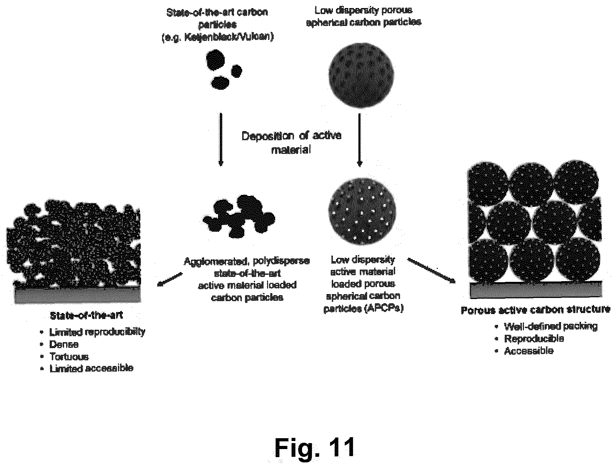

Fig. 11 is a schematic representation comparing prior art high dispersity particle sizes (left), which lead to undefined and rather compact electrode structures with low porosity as a result of small particle sizes (< 100 nm), to low dispersity particle sizes with larger particle sizes and defined intraparticle porosity according to the present invention (right), which enable the production of defined, adjustable and reproducible porous active carbon structures and electrode structures.

It is understood that the following description and references to the figures concern exemplary embodiments of the present invention and shall not be limiting the scope of the claims.

DETAILED DESCRIPTION OF THE INVENTION

For a better understanding of the invention, the following explanations of the terminology used herein are considered useful. In the context of the present invention, the following definitions apply:

"Porous catalyst layer" as used in the present application means a percolated structure suitable for use in a membrane electrode assembly. For example, a porous catalyst layer may comprise a carbon supported metal catalyst for enhancing reaction rates and electronic conduction, an ionomer for ion conduction, and voids for reactant gas and water transport.

"Porous active carbon structure" as used in the present application means a structure comprising a solid stable assembly of percolated carbon particles, wherein individual assembled carbon particles are specifically arranged in space with respect to each other, and wherein voids between individual carbon particles form an interparticular porosity. As used herein, porous active carbon structures further comprise additional species besides the percolated carbon particles, such as heteroatoms, doping agents, additives, binders, and other species.

"Particle diameter", also referred to as particle size, indicates the spatial extent of a single particle. Particle diameters are determined by counting out the particle diameters on electron micrographs obtained by scanning (transmission) electron microscopy with a sufficient large number of particles (at least 200 particles). Non-spherical particles (for example elliptical particles) are described by their minimum and maximum diameter.

"Particle-diameter dispersity Đ ("D stroke") is based on the IUPAC definition of dispersity given in Pure Appl. Chem., Vol. 83, No. 12, pp. 2251-2259, 2011. Particle diameter dispersity Đ measures the width of a particle-diameter distribution and is given by

$$Đ = \frac{\sum N_i \sum N_i d_i^4}{\sum N_i d_i \sum N_i d_i^3},$$

wherein $N_i$ denotes the number of particles of diameter $d_i$. For a sample of completely uniform particle-diameters Đ would be 1. Narrow particle diameter distributions having values for $Đ \leq 1.2$, preferably $\leq 1.1$ may be referred to as monodisperse particles, or low dispersity particles. Particle diameter distributions having values for $Đ > 1.2$, may be referred to as polydisperse particles or high dispersity particles.

"Pore size" (pore width) means the distance between two opposite walls of the pore. According to IUPAC nomenclature (Pure & Appl. Chem. Vol. 66, No. 8, pp. 1739-1758, 1994) micropores have width smaller than 2 nm, mesopores have width between 2 and 50 nm, macropores have widths larger than 50 nm.

"Templated pore size" means the diameter of a spherical template employed for the pore formation in spherical porous carbon particles as used in the present invention. Polymerisation of a carbon precursor in the presence of nanometer-sized spherical templates leads to the formation of carbon-template composites. Removal of the template material leaves nanometer-sized pores within the polymeric carbon structures. The pores may be interconnected, and therefore the pores will not exclusively have spherical shapes, but they may take the shape of juxtaposed spheres with varying intersectional diameters. Therefore, "templated pore size" may differ from measured pore size, and the templated pore size dispersity may differ from the measured pore size dispersity. The templated pore size dispersity corresponds to the particle diameter dispersity of the templates employed to form the pores.

As used herein, a "set" of porous spherical carbon particles defines a number of porous spherical particles which have in common their particle diameter distribution and/or their templated pore size distribution.

A set of porous spherical carbon particles may be divided into "subsets" of porous spherical carbon particles, wherein each subset consists of porous spherical carbon particles having a monomodal particle diameter distribution. For example, a set of porous spherical carbon particles which has a bimodal particle diameter distribution consists of two subsets, each subset consisting of porous spherical carbon particles having a monomodal particle diameter distribution. Similarly, a set of porous spherical carbon particles which has a bimodal particle diameter distribution consists of a number of subsets corresponding to the modality of the set, each subset consisting of porous spherical carbon particles having a monomodal particle diameter distribution.

A set of porous spherical carbon particles may also be divided into "subsets" of porous spherical carbon particles, wherein each subset consists of porous spherical carbon particles having a monomodal templated pore size distribution. For example, a set of porous spherical carbon particles which has a bimodal templated pore size distribution consists of two subsets, each subset consisting of porous spherical carbon particles having a monomodal templated pore size distribution. Similarly, a set of porous spherical carbon particles which has a bimodal templated pore size distribution consists of a number of subsets corresponding to the modality of the set, each subset consisting of porous spherical carbon particles having a monomodal templated pore size distribution.

As used herein, a metal may be any metallic or metalloid element, including transition metals. For example, the metal may be any metal from the Groups 1, 2, 12, 13, 14, 15, or 16 of the Periodic table of the elements, or any transition metal from the Groups 3, 4, 5, 6, 7, 8, 9, 10, 11, or 12 of the Periodic table of the elements, or any metal from the lanthanide of actinide series, or any metalloid from the Groups 13, 14, 15, 16, or 17 of the Periodic table of the elements.

The present invention according to the appended claims provides active material loaded porous spherical carbon particles (APCPs) and porous active carbon structures, as well as electrodes made from those active material loaded porous spherical carbon particles and porous active carbon structures. The APCPs and porous active carbon structures are loaded with an active material in order to impart activity to the particles and structures. The properties of the porous active carbon structures define the properties of the electrodes, such as porosity, 3D-configuration, tortuosity, pore distribution, packing density, pore connectivity, surface area, surface functionalisation, graphitisation, conductivity, and the like. These properties are influenced by the structure and properties of the APCPs from which they are assembled. In particular, design and good reproducibility of assembled porous active carbon structures requires control of the APCP properties, including their templated intraparticular porosity, particle diameter, as well as dispersity of templated intraparticular porosity and of particle diameter.

Compared to purely microporous materials with large specific surface areas (e.g. > 2000 $m^2g^{-1}$) but long and tortuous pore structures, well-defined mesoporous networks offer more efficient pathways for electrolyte ion infiltration and accommodation, resulting in improved mass transport and a more profitable and accessible electrode surface area. Thus, depending on the targeted application and its needs, the pore structure must be precisely engineered. This aspect applies to electrode structures, but is equally valid for filter structures or other applications that rely on 3D-porous carbon structures (freestanding, coated).

Typically, producing functional electrodes implies formulation of a slurry composed of a functional electrode material followed by its casting (e.g. doctorblading, spray coating, dip-coating, etc.) onto a substrate or current collector (a.o. gas diffusion layers or membranes for fuel cells and electrolyzers, aluminum and copper foils for batteries or graphite foils for supercapacitors), suggesting that not only the intraparticle (within the particle volume) but also well-defined interparticle (between particles in the electrode volume) porous architectures need to be designed. The interparticle porous structure of the coated electrode is controlled by morphological characteristics of the particulate material, e.g. primary particle shape and size, and sample homogeneity, which determines the primary particles packing. At the same time, the surface composition has to be adjusted in order to facilitate dispersion of the slurry in the desired solvent and its proper adhesion to the substrate.

High dispersity particulate materials not only compromise coating reproducibility, but also lead to higher tortuosity and denser packing, which can result in a non-accessible ("dead") electrode surface or rather resulting in a non-accessible electrode volume, meaning impeded percolation/penetration of the electrolyte, and hence, limited mass transport. The same argument also applies to reaction educts and products in the case of electrochemical conversion (e.g. in the field of electrocatalysis and electrosynthesis).

In commercial applications, high current rates are needed, meaning that increased loading and thicker electrodes with effective percolation and low tortuosity are required. However, usually thicker electrodes feature a lower effective accessible surface area electrode volume if not properly designed (due to diffusion limitation for instance). This emphasizes the need in an optimized 3D-structure engineering in line with facile electrode processing via controlling intraparticulate primary particle properties (such as pore size, pore connectivity, surface area, pore volume, surface functionality, graphitization and conductivity) as well as interparticulate properties (such as percolation, 3D electrode volume porosity etc.).

The APCPs and porous active carbon structures provided by the present invention allow tailoring of their properties as discussed above. This is achieved by providing APCPs having clearly defined particle diameters and/or clearly defined templated pore sizes. The particle diameters are clearly defined in the sense that the particle size distribution may be monomodal with a particle diameter dispersity Đ of 1.2 or less, preferably 1.1 or less. Alternatively, the particle diameter distribution may be bimodal or multimodal, and each diameter mode has a modal particle diameter dispersity d of 1.2 or less, preferably 1.1 or less. In addition, or as an alternative, the templated pore size is clearly defined in the sense that the templated pore size distribution may be monomodal with a templated pore sizes dispersity Đ' of 1.2 or less, preferably 1.1 or less. Alternatively, the templated pore size distribution may be bimodal or multimodal, and each diameter mode has a modal templated pore size dispersity d' of 1.2 or less, preferably 1.1 or less. According to the present invention, APCPs are provided which may be assembled to form porous active carbon structures, and for which particle diameters and templated pore sizes have been set independently of each other. In addition, the particle diameter dispersities and templated pore size dispersities of the APCPs according to the invention from which the porous carbon structures have been assembled may be set independently of each other. The synthesis of porous spherical carbon particles with low dispersities has been reported previously, for example by Melke et al. in "Electrochemical stability of silica templated polyaniline derived mesoporous N-doped carbons for the design of Pt based oxygen reduction reaction catalysts (Carbon 146 (2019) 44 - 59), in "Investigating the Effect of Microstructure and Surface Functionalization of Mesoporous N-Doped Carbons on V4+/V5+ Kinetics" (https://dx.doi.org/10.1021/acsaem.0c01489), and in Berestok et al. in "High-Efficiency Monolithic Photosupercapacitors: Smart Integration of a Perovskite Solar Cell with a Mesoporous Carbon Double-Layer Capacitor (Sol. RRL 2021, 5, 2100662): A polymerizable precursor, preferably aniline, is polymerized in the presence of a template, preferably SiOz particles, in order to form a polymer-SiOz composite. Then, the polymer-$SiO_2$ composite is carbonized, preferably under an inert gas atmosphere, and the template is removed by chemical etching.

Since then, it has been found that the choice of the template and the relative initiator concentrations result in the formation of independently adjustable low dispersity of particle diameters and of pore sizes. Loading of the porous spherical particles with active material leads to the formation of APCPs. Physico-chemical properties, i.e. graphitization and surface functionalization, of the low dispersity porous spherical carbon particles and thereby the APCPs can be controlled by thermal treatment and typical methods of chemical functionalization.

Previous approaches for the fabrication of 3D-porous carbon structures (e.g. electrode fabrication) do not use such highly defined carbon particle building blocks and are therefore very limited in the control and adjustability of the resulting 3D-porous carbon structures and active porous carbon structures. These approaches mostly used undefined carbon particles, which are very dispersive in terms of pore sizes and particle sizes. For controlled approaches, templated porous carbon particles have been used, but without defined particle shape or size, or low dispersity carbon particles have been used but without control over particle size or intraparticle porosity. Thus, even with these approaches, the tunability of the electrode structures was very limited.

According to the present invention, a carbon particle toolkit is provided, which allows to adjust both the intraparticulate pore sizes (or surface area) for charge storage or catalysis for example, and simultaneously the particle diameter for amongst others optimized mass transport. In this context, intraparticulate pore sizes and particle diameters are controlled independently from each other.

Since low dispersity spheres in a dense sphere packing are provided, the interparticle pore size between the particles scales with the particle size. For a defined intraparticular pore size optimized for a given application, the particle size may be adjusted to optimize the electrode: For example, the presence of intraparticulate pores leads to a large surface area and full utilization of carbon volume, and therefore a higher accessibility/utilization of the active materials in the specific application, whereas interparticulate pores influence mass transport to and from the spherical porous carbon particles.

In summary, the present invention provides a toolkit of active material loaded carbon spheres that allows control of all the physicochemical properties required for true 3D bottom-up activated electrode design.

This enables the fabrication and study of electrodes with independently defined pore size and particle size, wherein the loadings with activated material may be controlled. In addition, through the layered structure, MPLs may be easily combined with the activated electrodes.

It should be noted that the present invention may comprise any combination of the features and/or limitations referred to herein, except for combinations of such features which are mutually exclusive. The foregoing description is directed to particular embodiments of the present invention for the purpose of illustrating it. It will be apparent, however, to one skilled in the art, that many modifications and variations to the embodiments described herein are possible. All such modifications and variations are intended to be within the scope of the present invention, as defined in the appended claims.

EXAMPLES

The state of the art and the porous active carbon structure according to the invention comprise a carbon support and an active material in which the carbon supports are Ketjenblack® EC-300J (KB) and Vulcan® XC72 (V) and mesoporous N-doped carbon (MPNC) nanospheres. KB and V were purchased from Nouryon and Cabot Corporation, respectively, whereas MPNC used for electrode production were synthesized following a previously reported approach.

The active material used in one exemplary embodiment are Pt nanoparticles. The synthesis reactants for the syntheses of Pt nanoparticles $H_2PtCl_6$ $6H_2O$ (Grade: Premion) and ethylene glycol ($\geq 99\%$) were purchased from AlfaAesar and Sigma-Aldrich, respectively.

The active material used in another exemplary embodiment are NiMo alloy nanoparticles. NiMo alloy nanoparticles were synthesized using $NiNO_3 \cdot 6H_2O$, $(NH_4)_4[Mo_7O_{24}] \cdot 4H_2O$ and isoproponal ($\geq 99,5\%$) which were purchased from Sigma Aldrich. The hydrogen oxidation reaction (HOR) of NiMo based materials was tested in a three-electrode set-up using a mercury oxide (Hg/HgO, standard potential 0.926 V vs. RHE at 25°C, from Zahner) as reference electrode, a Pt coil as counter electrode and a glassy carbon disc (QJ 5 mm Pine Research for a rotating disc set-up) as working electrode on which a catalyst film is deposited. KOH pellets (99.99%, trace metal basis) were purchased from Sigma Aldrich to prepare a 0.1 mol·L$^{-1}$ KOH electrolyte.

The active material used in a further exemplary embodiment are molybdenum solfude coatings ($MoS_x$). The active material precursor for the synthesis of $MoS_x$ was synthesized following the procedure of McDonald et. al. (W. McDonald; G.D. Friesen; L.D. Rosenhein; W.E. Newton, Inorg. Chim. Acta 1983, 72, 205 - 210). For the precursor synthesis $(NH_4)_6[Mo_7O_{24}] \cdot 4H_2O$ was purchased from Acros, 10 M ammonia solution and ethanol from VWR Chemicals and diethylether from Carl Roth. $H_2S$ gas was evolved in a Kipp's apparatus using FeS from Merck and conc. HCl from VWR Chemicals.

For the preparation of electrode inks, isopropanol ($\geq 99,5\%$, Sigma Aldrich) and NafionTM 117 (5 wt.-% in lower aliphatic alcohols and water) were purchased from Carl Roth and Sigma Aldrich. The electrochemical hydrogen evolution reaction (HER) was tested in a three-electrode set-up with a $MoS_x$/MPNC loaded carbon fiber paper (Toray TGP-H-60) or glassy carbon (Ø 5 mm Pine Research for a rotating disc set-up) working electrode, a reversible hydrogen reference electrode (Gaskatel) and a Graphite rod (Carl Roth) counter electrode. Thereby, the RHE was placed in a Luggin capillary and the counter electrode was separated from the other electrodes by a porous glass frit. A 0.5 M $H_2SO_4$ electrolyte was prepared by diluting a suprapur 96% $H_2SO_4$ purchased from Merck. $H_2$, Ar and $N_2$ with a gas purity of 99.999% were purchased from Sauerstoffinierke Friedrichshafen.

The active material used in another exemplary embodiment is sulfur. S/MPNC composites were prepared using a melt-impregnation strategy based on the procedure of Zhang et al. (K. Zhang, Q. Zhao, Z. Tao, J. Chen, Nano Res. 2013, 6, 38). Sulfur powder (S, 99.98%), poly(vinylidene fluoride) (PVDF, Mw -534,000), 1-Methyl-2-pyrrolidinone (NMP, anhydrous, 99.5 %) were purchased from Sigma-Aldrich, while Super P conductive carbon black (SP, Timcal) was purchased from Nanografi. The battery electrolyte was 1M Lithium bis(trifluoromethanesulfonyl)imide (LiTFSI) in a mixed solvent of 1,3-dioxolane and 1,2-dimethoxyethane (DOL/DME, vol/vol = 1:1) with 2 wt.-% $LiNO_3$ which was purchased from E-Lyte Innovations GmbH. Carbon coated aluminium foil (aluminium thickness: 12 $\mu$m, carbon thickness: 1 $\mu$m, surface resistivity: < 30 ohms per 25 $\mu$m$^2$ 99.9 %) was purchased from Cambridge energy solutions. Electrochemical tests of the S/MPNC electrodes were carried out using 2325 coin cells. S/MPNC composite electrodes and lithium metal chips were used as cathodes and anodes, respectively. A microporous membrane (Celgard 2500) was used as the separator. The cells were assembled in an argon-filled glove box.

Example 1: Synthesis of carbon support - mesoporous N-doped carbon (MPNC) nanospheres

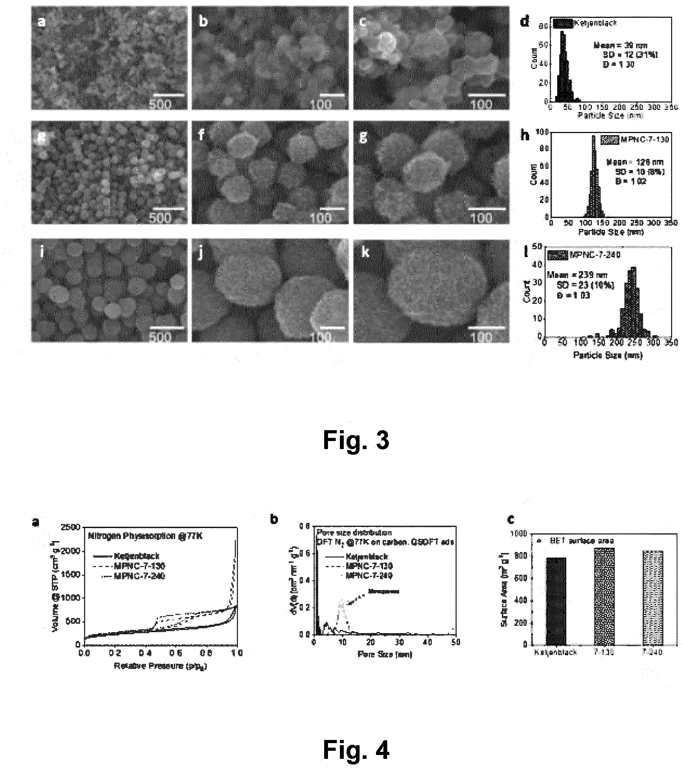

The synthesis of MPNC nanospheres has been reported previously. (https://doi.org/10.1016/j.carbon.2019.01.057 or https://dx.doi.org/10.1021/acsaem.0c01489). Aniline is polymerized in an oxidative polymerization in the presence of nanosized SiOz particles, in order to form a polymer-SiO2 composite. Then, the polymer-SiO$_2$ composite is carbonized at 1000°C under $N_2$, the template is removed by chemical etching and the sample is washed. A final heat-treatment step at 500°C under inert atmosphere is applied (Figs. 3, 4). To independently control the particle size and pore size of MPNC nanospheres the ratio between the polymerization initiator and aniline has to be adjusted. Further, the choice of spherical template size controls the pore size.

The microstructural properties of the carbon support can be adjusted by further high-temperature (>1000°C) and chemical treatment.

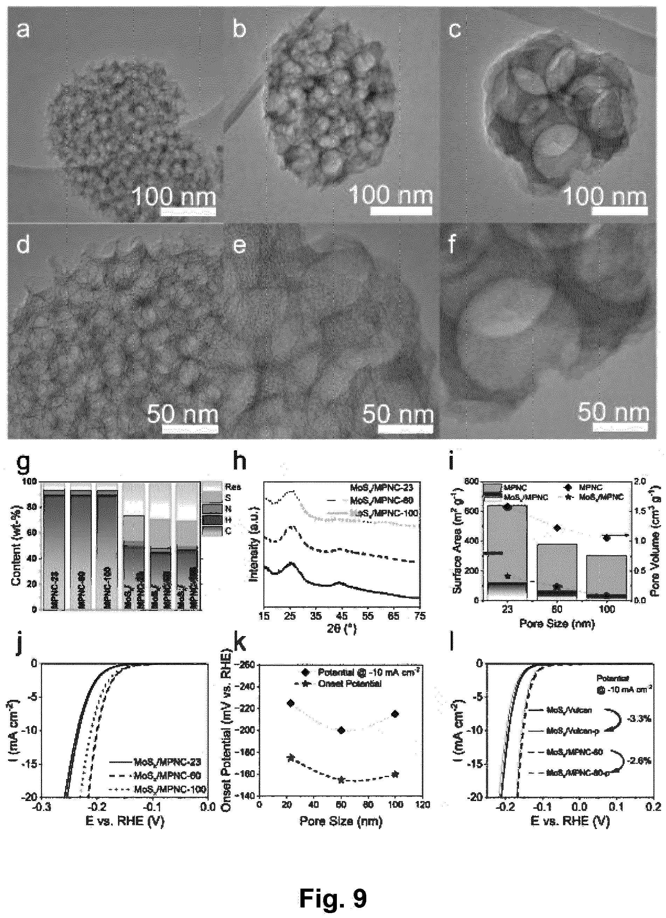

The particle size distributions of in Fig. 3 (d) KB, (h) MPNC-7-130 and (I) MPNC-7-240 were determined using multiple images recorded with a magnification of 200kx for KB and 50kx and 25kx for MPNC-based samples. Micrographs and particle size distribution clearly demonstrate the constant pore size while changing the particle size. Similarly, Fig. 9 displays MPNC materials with constant particle size and varying templated pore size. The nitrogen physisorption measurements at 77 K of KB, MPNC-7-130 and MPNC-7-240 on a 3P Instruments machine with Fig. 4 (a) isotherms and (b) calculated pore size distribution via DFT model (QSDFT adsorption branch of $N_2$ at 77 K on carbon) clearly show the defined mesoporosity of the MPNC sample. In Fig. 4 (c), the surface area (BET, Brunauer-Emmett-Teller) of KB, MPNC-7-130 and MPNC-7-240 is 785, 876 and 848 $m^2g^{-1}$, respectively.

Example 2: Pt nanoparticles as active material deposited on MPNC nanospheres carbon support

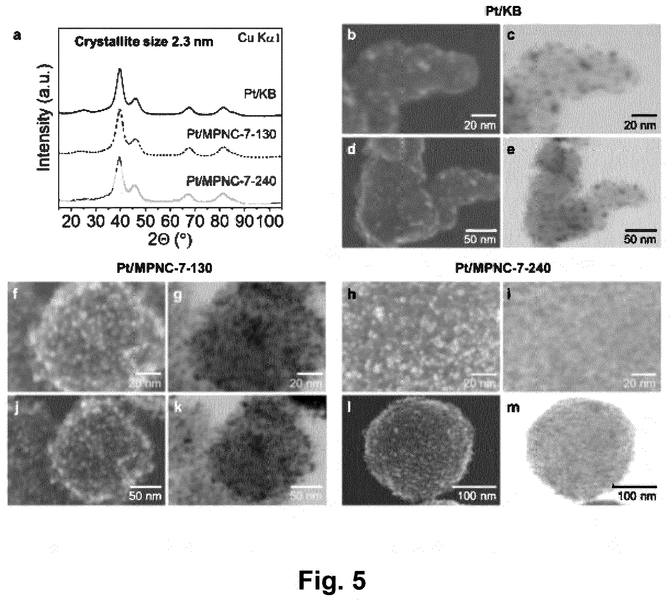

The synthesis of Pt-nanoparticles on KB and monodisperse MPNC nanospheres with a templated pore size of 7 nm, a mean particle size of either 126 nm or 239 nm (MPNC-7-130, MPNC-7-240) was based on a state-of-the-art ethylene glycol route. Therefore, 350 mg of carbon support was dispersed in 200 mL of ethylene glycol and homogenized by vigorous stirring. $H_2PtCl_6$ 6 $H_2O$ was dissolved in 100 mL of water and subsequently added to the carbon suspension. Thereby, a specific amount of Pt-precursors was used to obtain a Pt-mass loading of 40 wt.-%. The suspension was stirred at 120°C for 2h and cooled to room temperature for 1h. Finally, the samples were washed with boiling water until the supernatant was neutral and dried under vacuum at 80°C (Fig. 5).

XRD in Fig. 5 (a) on a Bruker D8 Discover of Pt/KB, Pt/MPNC-7-130 and Pt/MPNC-7-240 reveals the same XRD pattern and hence same Pt crystallite size (2.3 nm by Scherrer equation). SEM images of Pt/KB (in SE (secondary electron) mode (Fig. 5(b) and (d)) and TE (transmission electron) mode (Fig. 5(c) and (e)), Pt/MPNC-7-130 (in SE mode (Fig. 5(f) and (j)) and TE mode (Fig. 5(g) and (k)) and Pt/MPNC-7-240 (in SE mode (Fig. 5(h) and (I)) and TE mode (Fig. 5(i) and (m)). SEM image measurements were carried out using a Field Emission Gun High Resolution SEM SU8220 (Hitachi) equipped with a SE and TE detector.

Example 3: NiMo nanoparticles as active material deposited on MPNC nanospheres carbon support

The synthesis of the active NiMo material on the support material MPNC-12-300 (templated pore size 12 nm, mean particle size 309 nm) and MPNC-23-300 was carried out by successive deposition of the two metals that make up the alloy. First, the carbon support was infiltrated by an incipient wetness impregnation with aqueous $(NH_4)_4[Mo_7O_{24}]\cdot4$ $H_2O$. Then, the water was removed by rotation evaporation. The second loading used a solution of $NiNCO_3\cdot6$ $H_2O$ in iPrOH (125 mg·mL$^{-1}$). The solvent was removed by using a rotary evaporator. The mass of metal precursor used were adjusted to yield a metal loading of 34 wt.-% of the total mass (metal and carbon) and a metal ratio of $Ni_{96}Mo_4$. The metal precursor-carbon composites were thermally treated at 550°C for 1h with a heating ramp of 10°C·min$^{-1}$ under 5% $H_2$/Ar. After cooling the furnace to room temperature, a final NiMo/MPNC-12-300 and NiMo/MPNC-23-300 was obtained (Fig. 6).

Nitrogen physisorption measurements at 77 K of mesoporous spherical carbon particles MPNC-12-300 on a 3P Instruments machine with (Fig. 6(a)) isotherms and BET surface area and (Fig. 6(b)) calculated pore size distribution via DFT model (QSDFT adsorption branch of $N_2$ at 77 K on carbon). The particle size distribution in Fig. 6(c) was determined by counting individual particles on SEM micrographs at a magnification of 25kx, and it demonstrates the low dispersity carbon particle size of MPNC-12-300. Fig. 6 (d, e) show SEM images of MPNC-12-300 at different magnifications. Fig. 6(f) shows an SEM micrograph in TE modus of NiMo loaded MPNC-12-300. The corresponding XRD pattern in Fig. 6(h) shows the formation of the NiMo alloy with a particle size of 14.1 nm (Fig. 6(i)) as determined by counting individual particles of SEM images. The electrochemical activity towards hydrogen oxidation reaction (HOR) of NiMo loaded MPNC samples in alkaline medium was tested in a three-electrode set-up. The catalyst films were prepared based on a catalyst ink. Thereby, 5 mg NiMo based MPNC nanoposheres were added to a mixture of 434 μl water, 51 μl isopropanol and 26 μl Nafion binder. After homogenation of catalyst ink, a specific amount of the dispersion was applied to the working electrode to yield a NiMo/MPNC loading of 500 μg$_{Cat}$ cm$^{-2}$. Then, the dried electrode film was conditioned in the electrochemical cell using 60 cyclic voltammetry (CV) cycles with 20 mV s$^{-1}$ from -0.2 V to 0.4 V vs. RHE in Ar saturated electrolyte. The further CV cycles under AR saturation were applied as follows: 5 cycles with 5 mV s$^{-1}$ and 4 cycles with 1 mV s$^{-1}$ under rotation of 1600 rpm and 5 cycles with 5 mV s$^{-1}$ and 4 cycles with 1 mV s$^{-1}$ under rotation of 2500 rpm from -0.06 to 0.4 V vs. RHE. Then, 40 min of $H_2$ saturation was carried out and the same protocol was conducted under $H_2$ saturation. Fig. 6 (i) confirmed the HOR activity of NiMo/MPNC-12-300 by showing increased current response under $H_2$ saturation when compared to the same CV under Ar saturated electrolyte. Furthermore, the comparison of CVs for HOR of NiMo/MPNC-12-300 and NiMo/MPNC-23-300 demonstrated a dependence of HOR activity towards the used NiMo based MPNC sample (Fig. 6 (j)).

Example 4: MoS$_x$ coatings as active material deposited on MPNC nanospheres carbon support for the HER

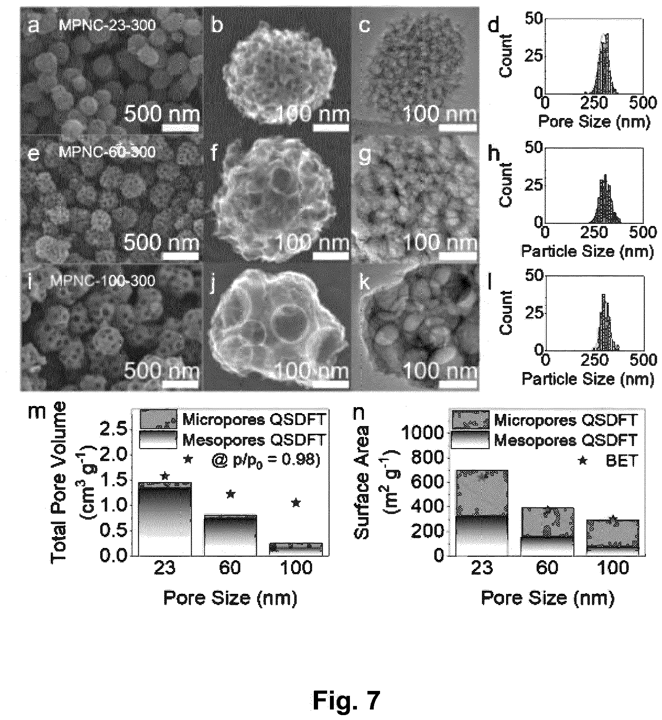

MPNC nanospheres with a particle size of 300 nm using templated pore sizes of 23 nm, 60 nm and 100 nm, respectively, were used for electrode production. The templated pore size and particle size are indicated in the sample numbering "MPNC-(templated pore size)-(particle size)". Fig. 7 shows SEM images of MPNC-23-300 (a, b) MPNC-60-300 (e, f) and MPNC-100-300 (i, j), and TEM images (c, g, k) and particle size distribution (d, h, l) of MPNC-23-300, MPNC-60-300 and MPNC-100-300, respectively. Total pore volumes (Fig. 7(m)) and surface areas (Fig. 7(n)) including relative shares of micro- and mesopores of the three MPNC samples calculated from nitrogen physisorption experiments, QSDFT modelling and BET modelling. Micrographs and particle size distribution clearly demonstrate the constant particle size while changing the pore size.

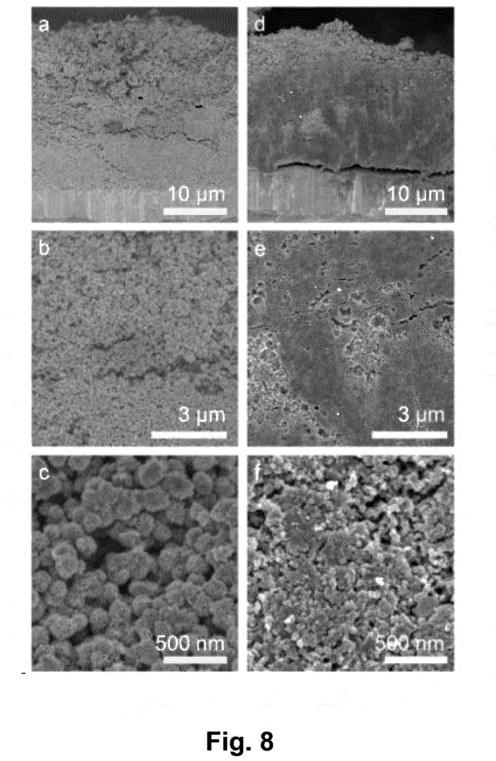

(NH$_4$)$_6$[Mo$_7$O$_{24}$]·4H$_2$O (5.00 g) was dissolved in ammonia solution (40.0 ml, 10.0 M) and a steady flow of H$_2$S was bubbled through the solution for five hours. As the reaction proceeded, the colour of the clear reaction solution changed from colourless to yellow and orange to dark red until dark red crystals precipitated towards the end of the reaction period. Crystallization was completed for 30 minutes in an ice bath. The precipitate was isolated, washed with ice-cold ethanol and diethyl ether (20.0 ml each) and dried under vacuum. 100 mg of the dry product was dissolved in water (2.00 ml) and sonicated until a homogeneous solution was obtained. The carbon support materials (Vulcan or MPNC) were added and the mixtures were sonicated again for 20 minutes. Afterwards, the solvent was removed with a rotary evaporator. The resulting dry composites were transferred into a muffle oven and heated to 80°C for 17 hours under air. To obtain inks for electrode preparation, the composite materials (3.0 mg) were mixed with water (995 μl), isopropanol (250 μl) and Nafion ionomer binder (5 μl). The mixtures were sonicated for 20 minutes before a defined volume of ink was drop-casted on a carbon fiber paper or a glassy carbon rotating disc electrode (GC-RDE) to obtain an absolute geometrical molybdenum loading of 100 μg/cm$^2$. Fig. 8 shows cross-sectional SEM images of MoS$_x$/MPNC-60-300 (a, b, c) and MoS$_x$/Vulcan (d, e, f), demonstrating a more porous electrode structure of MoS$_x$/MPNC-60-300.

For the test of the effect of different templated pore sizes (23, 60, 100 nm) with the same particle size (300 nm) of MoS$_x$/MPNC samples on HER performance, active material films were cycled in H$_2$ saturated 0.5 M H$_2$SO$_4$ electrolyte on a GC-RDE at 1600 rpm between 200 mV and -300 mV vs. RHE at 5 mV s$^{-1}$ with a starting point of 50 mV vs. RHE. Prior to HER test, the samples were conditioned between 200 and -300 mV vs. RHE for 50 cycles at 50 mV s$^{-1}$ and a starting point of 50 mV vs. RHE. Then, the iR-corrected cathodic scan of the CV was used to determine the onset potential at an absolute current density of 1 mA cm$^{-2}$ and the overpotential at -10 mA cm$^{-2}$. The stability of the HER catalysis of MoS$_x$/MPNC-60 was compared to MoS$_x$/Vulcan. Thereby, the samples were coated on a carbon fiber paper. The HER activity was tested before and after (testing protocol see above) a cycling stress test between 200 mV and -300 mV vs. RHE for 50 cycles at 5 mV s$^{-1}$ and a starting point of 50 mV vs. RHE in a H$_2$-saturated 0.5 M H$_2$SO$_4$ electrolyte. Fig. 9 shows TEM images of MoS$_x$/MPNC-23-300 (a, d), MoS$_x$/MPNC-60-300 (b, e) and MoS$_x$/MPNC-100-300 (c, f). The images show no MoS$_x$ crystallites but an homogeneous coating of the MPNC surface with MoS$_x$. This becomes clearly visible as dark rings around the edge of the pores. Also shown are elemental analysis (g), XRD (h) and results from nitrogen physisorption experiments (j) for the three MoS$_x$/MPNC composite materials. Electrochemical performance of the composite materials in CV measurements on GC-RDE at 1600 rpm and 5 mV·s$^{-1}$ in H$_2$-saturated 0.5 M H$_2$SO$_4$ is shown in subfigure (j) and resulting overpotentials at -10 mA cm$^{-2}$ and -1 mA cm$^{-2}$ (onset potential) in subfigure (k). Comparison of HER activity and performance stability of state-of-the-art Vulcan carbon support based MoS$_x$ and MoS$_x$/MPNC-60 in CV measurements on carbon fiber paper as gas diffusion layer at 5 mV s$^{-1}$ in H$_2$ saturated 0.5 M H$_2$SO$_4$ is shown in subfigure (l). The performance indicators clearly demonstrate a beneficial templated pore size of 60 nm for increased HER activity which was only observable by providing MPNCs with different pore sizes while keeping a constant particle size. Furthermore, the MoS$_x$/MPNC-60-300 sample shows a -20% decrease in overpotential at -10 mA cm$^{-2}$ and an increased stability after cycling stress test when compared to state-of-the-art Vulcan based MoS$_x$.

Example 5: Sulfur as an active material in S/MPNC composites as cathodes for Li-S batteries

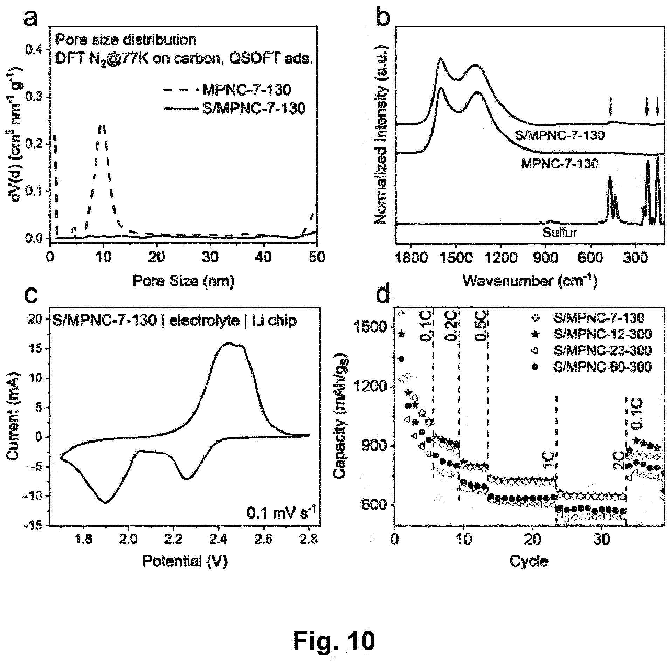

MPNCs with a mean particle size of approximately 300 nm with templated pore sizes of 12 nm (MPNC-12-300), 23 nm (MPNC-23-300) and 60 nm (MPNC-60-300), respectively, and a mean particle size of approximately 130 nm and a templated pore size of 7 nm (MPNC-7-130) were used for the fabrication of S/MPNC composites. S/MPNC composites were prepared using a melt-impregnation strategy. Corresponding amounts of MPNC powder and elemental sulfur were mixed together by grinding. Afterwards, the powder was transferred into a Teflon autoclave, sealed under Ar and heated up to 155°C for 15 h, causing the molten sulfur to flow into the pores of the MPNC. Fig. 10 (a) shows particle size distribution from QSDFT modelling of the nitrogen physisorption adsorption branch measured at 77K which clearly demonstrates the filling of the porous network by the impregnation process. Furthermore, Raman bands and redox peaks of sulfur show the presence of sulfur in S/MPNC-7-130 as demonstrated by (b) Raman and (c) electrochemical CV measurements. A CV trace was recorded in the range of 1.7 to 2.7 V at 0.1 mV s$^{-1}$ using S/MPNC-7-130 as a cathode, a Li chip as an anode, a separator and an electrolyte in a coin cell set-up. The amount of sulfur for the impregnation was calculated based on the cumulative pore volume of the MPNCs to allow the pore loading of 50%, using the following equations: $S_{amount}$ (g) = Sulfur density (g cm$^{-3}$) $\times$ volume of pores (cm$^3$) $\times$ pore loading (%) and volume of pores (cm$^3$) = cumulative pore volume (cm$^3$ g$^{-1}$) $\times$ amount of carbon material (g).

For the preparation of the battery electrodes, first the S/MPNC-containing inks were prepared as follows: 20 mg PVDF binder was dissolved in 1 mL NMP. To the obtained clear solution, 160 mg of the active S/MPNC material together with 20 mg Super-P powder (as a conductive additive) were added, followed by mixing until the mixture became homogeneous. The weight ratio between the MPNC active material, Super-P and binder was set to 8:1:1. The concentration of the ink was 200 mg·mL$^{-1}$.

The ink was applied to a carbon coated aluminum foil and doctor-bladed to a homogeneous film (h = 250 $\mu$m). The obtained coating was dried. Disc-shaped electrodes (d = 12 mm, A = 1.13 cm$^2$) were stamped out of the completely dried film and carefully weighted before the coin cell assembly. The resulting mass loading of MPNC active material was around 2 $\pm$ 0.15 mg cm$^{-2}$, i.e. 1.3 $\pm$ 0.15 mgS cm$^{-2}$.

S/MPNC composite electrodes and lithium metal chips were used as cathodes and anodes in a coin cell setup, respectively. The electrodes were separated by a separator and a defined volume of electrolyte was applied until the seperator was wetted. Electrochemical analysis of S/MPNC-7-130, S/MPNC-12-300, S/MPNC-23-300 and S/MPNC-60-300 shows the C-rate dependency on the capacity due to the dependence of the mass transport on the diffusion rate, which in turn depends on the interparticle and intraparticle porosity of the MPNC based porous active carbon structure (Fig. 10 (d)). This demonstrates a clear effect of templated pore size and particle size of MPNC on rate capability. All capacity values were calculated based on the sulfur mass used.

## Claims

1. Composition comprising one or more sets of active material loaded porous spherical carbon particles (APCPs), wherein each of said sets of APCPs has

   a monomodal, bimodal or multimodal particle diameter distribution, and/or
   a monomodal, bimodal or multimodal templated pore size distribution,
   wherein each mode of said particle diameter distribution defines a subset of APCPs within the set, each subset having a particle diameter dispersity (d) of 1.2 or less, and
   wherein each mode of the templated pore size distribution defines a subset of APCPs within the set, each subset having a templated pore size dispersity (d') of 1.2 or less,

   optionally wherein at least one of the modal subset particle diameter dispersity (d), and the modal subset templated pore size dispersity (d') is 1.1 or less.

2. Composition according to claim 1, wherein one or more of the said sets of APCPs have

   a monomodal particle diameter distribution with a particle diameter dispersity (Đ) of 1.2 or less, and/or
   a monomodal templated pore size distribution with a templated pore size dispersity (Đ') of 1.2 or less,

   optionally wherein at least one of the particle diameter dispersity (Đ), and the templated pore size dispersity (Đ').

3. Composition according to any one of claims 1 to 2, consisting of one said set of ACPCs.

4. Composition according to any one of the previous claims, wherein within a set of ACPCs having a bimodal or multimodal templated pore size distribution, individual particles have a monomodal templated pore size distribution, or individual particles have a bimodal or multimodal templated pore size distribution.

5. Composition according to any one of the previous claims, wherein the APCPs have particle diameters of 10 nm to 5000 nm, preferably of 25 nm to 2500 nm or of 50 nm to 500 nm, and wherein the templated pore sizes are from 1 nm to 1000 nm, preferably from 2 nm to 500 nm or from 5 nm to 100 nm.

6. Composition according to any one of the previous claims, wherein the active material is selected from metals, metal alloys, metal compounds such as oxides, sulfides, nitrides, phosphides, carbides or others in the form of continuous films, nanoparticles, clusters and/or single-site catalysts, molecular compounds, coordination complexes, enzymes, polymers, and any combinations thereof, and/or wherein the active material is active in heterogeneous catalysis, electrocatalytic reactions, electrochemical reactions, in adsorption and absorption applications, in electrochemical energy storage applications, or in separation technologies, and/or wherein the active material is in the shape of spheres, cages, cubes, triangles, rods, octahedrons or repeating 2D- or 3D-geometrical shapes, or any combination thereof.

7. Composition according to any one of the previous claims, wherein the active material loading on the APCPs is from 1 to 95 wt.-% , for example 5 to 90 wt.-%, or 10 to 85 wt.-%, or 15 to 80 wt.-%, or 20 to 75 wt.-%, or 25 to 70 wt.-%, or 30 to 65 wt.-%, or 35 to 60 wt.-%, or 40 to 55 wt.-%, or 45 to 50 wt.-%, based on the total weight of the APCPs.

8. Porous active carbon structure assembled from a composition as defined in any one of the previous claims.

9. Porous active carbon structure according to claim 8, wherein the said one or more sets of APCPs are arranged in a layered fashion, each layer comprising one or more sets of APCPs, , wherein each layer consists of one set of APCPs, or wherein each layer consists of two or more sets of APCPs.

10. Porous active carbon structure according claim 9, wherein individual layers include the same or different active materials, and/or wherein individual layers include different amounts of active material, optionally wherein individual layers do not include any active material.

11. Porous active carbon structure according to any one of claims 8 to 10, wherein the interparticle pore volume is from 5% to 93%, for example from 10% to 85%, or from 15% to 75%, or from 20% to 55%, or from 25% to 50%, or preferably from 26% to 48%, and/or wherein a ratio of intraparticle pore volume to interparticle pore volume is from 0.05 to 3.0, preferably from 0.1 to 2.0, more preferably from 0.7 to 1.9.

12. Porous active carbon structure according to any one of claims 8 to 11, wherein the active material is supported on said APCPs, and/or wherein the active material is arranged within the carbon structure.

13. Method for producing a composition of any one of claims 1 to 7, comprising the steps of

(i) polymerisation of a polymerizable precursor in the presence of a template, in order to form a polymer-template composite,
(ii) carbonisation of the obtained polymer-template composite,
(iii) removal of the template by chemical etching, wherein the choice of template and the initiator concentration may be adjusted to independently define particle diameter distribution and pore size distribution, and
(iv) deposition of one or more active materials,

wherein the said deposition may occur during or after step (i), (ii) and/or (iii).

14. Method according to claim 13, wherein during step (i), the particle diameter and the particle diameter dispersity (Đ) of the obtained polymer-template composite are controlled independently from the particle diameter of the template by adjusting the molar ratio of initiator to polymerizable precursor.

15. Method according to claim 14, wherein the molar ratio of initiator to polymerizable precursor is in the range of 0.01 to 10, preferably of 0.1 to 2, and/or wherein the molar ratio of polymerizable precursor to template is in the range of 0.01 to 4, for example from 0.1 to 1, or from 0.3 to 0.8, or from 0.5 to 0.6.

16. Method according to any one of claims 13 to 15, wherein the template consists of inorganic nanoparticles having particle diameters in the range of 1 nm to 800 nm, preferably from 5 nm to 100 nm, and wherein the inorganic nanoparticles have a particle diameter dispersity of 1.2 or less, optionally wherein the inorganic nanoparticles are selected from $SiO_2$, metal oxides and inorganic salts.

17. Method of production of a porous active carbon structure of any one of claims 8 to 12, comprising the steps of

(i) providing one or more sets of APCPs as defined in any one of claims 1 to 7, or obtained according to a method of any one of claims 13 to 16;
(ii) mixing the provided APCPs with one or more additives;
(iii) applying the obtained mixture onto a substrate to form a layer of porous active carbon structure;
(iv) drying and/or curing the applied mixture to form a dry layer of porous active carbon structure; and
(v) optionally repeating steps (i) and (ii), followed by (iii') applying the obtained mixture onto the previously formed layer of porous active carbon structure, and followed by (iv') optionally curing the applied mixture to form a layer of porous active carbon structure on top of the previously formed layer of porous active carbon structure, followed by optionally (v') repeating step (v),

wherein the method optionally further comprises one or more calendaring steps after step (iv), (iv'), (v) and/or (v'),
wherein said porous spherical carbon particles are loaded with an active material.

18. Method according to claim 17, wherein the mixing step (ii) includes addition of a dispersion medium to form an ink or a paste, and wherein steps (iii) and (iii') of applying the obtained ink or paste is carried out by 3D-printing, slot-die coating, ink-jet printing, doctor-blading, spray coating, spin-coating or dip-coating, optionally wherein the mixing step (ii) leads to the formation of a dry particulate composition.

19. Method according to any one of claims 17 or 18, wherein the substrate in step (iii) is a current collector, such as a gas diffusion layer or membrane for a fuel cells or an electrolyzer, an aluminium or copper foil for a battery or a graphite foil for a supercapacitor, or a stainless steel microreactor wall.

20. Electrode comprising APCPs as defined in any of claims 1 to 7, or a porous active carbon structure of any one of claims 8 to 12, optionally further comprising binders such as for example polymeric binders and/or ionomers, and optionally further comprising conductive additives or co-catalysts, wherein the conductive additives and co-catalyst make up no more than 20% of the total weight of the electrode, such as for example no more than 10% of the electrode.

21. Use of a composition of any one of claims 1 to 7, or of a porous active carbon structure of any one of claims 8 to 12, or of an electrode of claim 20 in an electrochemical energy storage device such as a battery or a double-layer capacitor, such as a supercapacitor or a pseudocapacitor, an electrochemical energy conversion device such as a fuel cell or an electrolyser.

22. Use of a composition of any one of claims 1 to 7, or of a porous active carbon structure of any one of claims 8 to 12, as or in conductive additives/scaffolds, gas diffusion layers, heterogeneous catalysis or in an article of manufacture for drug delivery, adsorption and absorption applications, or water purification applications.

Fig. 1

State-of-the-art
carbon particles
(e.g. Ketjenblack/Vulcan)

State-of-the-art
polydisperse carbon
particles

Low dispersity porous
spherical carbon particles

Deposition of
active material

State-of-the-art
active material loaded
carbon particles

State-of-the-art
polydisperse active material
loaded carbon particles

Low dispersity
active material loaded porous
spherical carbon particles (APCPs)

- Neither control of primary particle size nor pore size/structure
- No direct control of active material deposition
- Limited direct control of carbon microstructure

- Limited control of primary particle size and pore size/structure
- Limited direct control of active material deposition
- Limited direct control of carbon microstructure

- Independant control of primary particle size and pore size/structure
- Controllable carbon microstructure
- Control of active material deposition by porous carbon structure
- Tuneable interactions between carbon and active material
- Tuneable interactions between active material loaded particle and additives, e.g. ionomer

## Fig. 2

**Fig. 3**

**Fig. 4**

Fig. 5

Fig. 6

**Fig. 7**

**Fig. 8**

Fig. 9

Fig. 10

**Fig. 11**

Europäisches
Patentamt

European
Patent Office

Office européen
des brevets

# EUROPEAN SEARCH REPORT

Application Number

EP 23 20 7555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MELKE JULIA ET AL: "Electrochemical stability of silica-templated polyaniline-derived mesoporous N-doped carbons for the design of Pt-based oxygen reduction reaction catalysts", CARBON, vol. 146, 19 January 2019 (2019-01-19), pages 44-59, XP093142882, GB ISSN: 0008-6223, DOI: 10.1016/j.carbon.2019.01.057 * Abstract * * Detailed synthesis on Experimental section * * figures 2-4 * * 3.1.2. Pore size distribution * * 3.1.3. Pore wall thickness * ----- | 1-22 | INV. C01B32/05 H01M4/86 H01M4/02 H01M4/92 |
| X | MELKE JULIA ET AL: "Investigating the Effect of Microstructure and Surface Functionalization of Mesoporous N-Doped Carbons on V 4+ /V 5+ Kinetics", ACS APPLIED ENERGY MATERIALS, vol. 3, no. 12, 18 November 2020 (2020-11-18), pages 11627-11640, XP093142796, ISSN: 2574-0962, DOI: 10.1021/acsaem.0c01489 * Results * * figures 2,3 * * Experimental section: Materials * ----- -/-- | 1-5 | TECHNICAL FIELDS SEARCHED (IPC)<br><br>H01M<br>C01B |

The present search report has been drawn up for all claims

| Place of search | Date of completion of the search | Examiner |
|---|---|---|
| Munich | 19 March 2024 | Galbiati, Ivano |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..........................................................................
& : member of the same patent family, corresponding
   document

EPO FORM 1503 03.82 (P04C01)

**page 1 of 2**

Europäisches
Patentamt

European
Patent Office

Office européen
des brevets

## EUROPEAN SEARCH REPORT

Application Number

EP 23 20 7555

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PAVLENKO V ET AL: "A comprehensive review of template-assisted porous carbons: Modern preparation methods and advanced applications", MATERIALS SCIENCE AND ENGINEERING: R: REPORTS, ELSEVIER, AMSTERDAM, NL, vol. 149, 18 May 2022 (2022-05-18), XP087066421, ISSN: 0927-796X, DOI: 10.1016/J.MSER.2022.100682 [retrieved on 2022-05-18] * the whole document * | 1-22 | |

TECHNICAL FIELDS
SEARCHED (IPC)

The present search report has been drawn up for all claims

| Place of search | Date of completion of the search | Examiner |
|---|---|---|
| Munich | 19 March 2024 | Galbiati, Ivano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

**Patent documents cited in the description**

- EP 3828133 A1

- CN 116495731 A

**Non-patent literature cited in the description**

- **SUTER**. Engineering Catalyst Layers for Next-Generation Polymer Electrolyte Fuel Cells: A Review of Design, Materials, and Methods. *Adv. Energy Matter*, 2021, vol. 11, 2101025, https://doi.org/10.1002/aenm.202101025
- **LIU et al.** Effect of Catalyst Ink and Formation Process on the Multiscale Structure of Catalyst Layers in PEM Fuel Cells. *Appl. Sci*, 2022, vol. 12, 3776, https://www.mdpi.com/2076-3417/12/8/3776
- **WANG et al.** Achievements, challenges and perspectives on cathode catalysts in proton exchange membrane fuel cells for transportation. *Nature Catalysis*, 2019, vol. 2, 578-589, https://doi.org/10.1038/s41929-019-0304-9
- **JOO et al.** Preparation of mesoporous carbon templated by silica particles for use as a catalyst support in polymer electrolyte membrane fuel cells. *Catalysis Today*, 2006, vol. 111, 171-175
- **SHU et al.** Hierarchically mesoporous carbon spheres coated with a single atomic Fe-N-C layer for balancing activity and mass transfer in fuel cells. *Carbon Energy*, 2022, vol. 4, 1-11
- **CHOI et al.** Single-Step Fabrication of a Multiscale Porous Catalyst Layer by the Emulsion Template Method for Low Pt-Loaded Proton Exchange Membrane Fuel Cells. *ACS Appl. Energy Mater*, 2021, vol. 4 (4), 4012-4020

- **WANG et al.** Controlled Synthesis of N-Doped Carbon Nanospheres with Tailored Mesopores through Self-Assembly of Colloidal Silica. *Angew. Chem. Int. Ed*, 2015, vol. 54, 15191-15196
- *Pure Appl. Chem.*, 2011, vol. 83 (12), 2251-2259
- *Pure & Appl. Chem*, 1994, vol. 66 (8), 1739-1758
- **MELKE et al.** Electrochemical stability of silica templated polyaniline derived mesoporous N-doped carbons for the design of Pt based oxygen reduction reaction catalysts. *Carbon*, 2019, vol. 146, 44-59
- *Investigating the Effect of Microstructure and Surface Functionalization of Mesoporous N-Doped Carbons on V4+/V5+ Kinetics*, https://dx.doi.org/10.1021/acsaem.0c01489
- **BERESTOK et al.** High-Efficiency Monolithic Photosupercapacitors: Smart Integration of a Perovskite Solar Cell with a Mesoporous Carbon Double-Layer Capacitor. *Sol. RRL*, 2021, vol. 5, 2100662
- **W. MCDONALD** ; **G.D. FRIESEN** ; **L.D. ROSENHEIN** ; **W.E. NEWTON**. *Inorg. Chim. Acta*, 1983, vol. 72, 205-210
- **K. ZHANG** ; **Q. ZHAO** ; **Z. TAO** ; **J. CHEN**. *Nano Res*, 2013, vol. 6, 38